# EUROPEAN PATENT APPLICATION

(11) **EP 2 221 904 A1**
(43) Date of publication of application: **25.08.2010**
(21) Application number: 08853746.9
(22) Date of filing: 21.11.2008
(51) Int. Cl.: H01M 4/58, H01M 10/40

(54) **SODIUM ION RECHARGEABLE BATTERY AND NEGATIVE ELECTRODE ACTIVE MATERIAL FOR USE IN THE SODIUM ION RECHARGEABLE BATTERY**

(30) Priority: 26.11.2007 JP 2007304281
(71) Applicant: Kyushu University, Higashi-ku Fukuoka-shi Fukuoka 812-8581 (JP); Sumitomo Chemical Company, Limited, Tokyo 104-8260 (JP)
(72) Inventor: OKADA, Shigeto, Fukuoka-shi Fukuoka 812-8581 (JP); NISHIJIMA, Manabu, Fukuoka-shi Fukuoka 812-8581 (JP); DOI, Takayuki, Fukuoka-shi Fukuoka 812-8581 (JP); YAMAKI, Jun-ichi, Fukuoka-shi Fukuoka 812-8581 (JP); MAKIDERA, Masami, Tsukuba-shi Ibaraki 305-0047 (JP); YAMAMOTO, Taketsugu, Tsukuba-shi Ibaraki 305-0045 (JP)
(74) Representative: Hart-Davis, Jason
(86) International application number: PCT/JP2008/071255
(87) International publication number: WO 2009/069559

(57) **Abstract**

A sodium ion secondary battery having far superior potential stability during discharge when repeatedly charging and discharging, and a negative electrode active material capable of being efficiently doped and dedoped with sodium ions used therefor are provides. The sodium ion secondary battery according to the present invention includes a positive electrode containing a positive electrode active material capable of being doped and dedoped with sodium ions, a negative electrode containing a negative electrode active material containing, as a sole component or as a main component, a glassy carbonaceous material capable of being doped and dedoped with sodium ions, and an electrolyte containing sodium ions. Further, the negative electrode active material for a non-aqueous electrolyte sodium ion secondary battery according to the present invention includes a glassy carbonaceous material as a sole component or as a main component.

## Description

### TECHNICAL FIELD

The present invention relates to a sodium ion secondary battery and a negative electrode active material used therein.

### BACKGROUND ART

A lithium ion secondary battery is a representative example of a non-aqueous electrolyte secondary battery. Since lithium ion secondary batteries can be used as a large-scale secondary battery such as a large-scale power source for vehicles, e.g., electric vehicles and hybrid vehicles, and a distributed power storage battery, the demand for lithium ion secondary batteries is on the rise. However, since, in a lithium ion secondary battery, scarce metals such as cobalt, nickel, and lithium are often used for materials, there are concerns that the supply of such scarce metals may not be able to keep up with the increase in demand of large-scale secondary batteries.

In response, a sodium ion secondary battery is being investigated as a non-aqueous electrolyte secondary battery capable of resolving the supply concerns about battery materials. The sodium ion secondary battery has a positive electrode containing a positive electrode active material capable of being doped and dedoped with sodium ions, a negative electrode containing a negative electrode active material capable off being doped and dedoped with sodium ions, and a non-aqueous electrolyte containing sodium ions. The sodium ion secondary battery may be composed of materials which have a plentiful supply and which are inexpensive. Therefore, commercial use of such a sodium ion secondary battery is expected to enable large-scale secondary batteries to be supplied in large amounts.

In a sodium ion secondary battery, similar to the behavior of lithium ions in the lithium ion secondary battery, charging and discharging of a battery occurs as a result of the sodium ions moving back and forth between a negative electrode and a positive electrode via an electrolyte. As seen from the negative electrode, storage (doping) of the sodium ions in the negative electrode active material corresponds to charging, and release (dedoping) of the sodium ions from the negative electrode active material corresponds to discharging.

The use of a carbonaceous material having a structure with a high degree of graphitization, such as graphite, has been commercially used for a negative electrode active material in a lithium ion secondary battery. It has also been attempted to apply such a carbonaceous material as the negative electrode active material for a sodium ion secondary battery. However, such carbonaceous materials are neither doped nor dedoped easily with sodium ions. Thus, it has been known that a carbonaceous material which is reported to be usable as a negative electrode active material in a lithium ion secondary battery as described above is very difficult to use as it stands for a negative electrode active material when manufacturing a sodium ion secondary battery. To resolve this problem, Patent Document 1 proposes introducing lithium ions along with sodium ions into graphite which serves as the negative electrode active material in a sodium ion secondary battery.

[Patent Document 1] JP11-40156A

### DISCLOSURE OF INVENTION

### PROBLEM TO BE SOLVED BY THE INVENTION

In the sodium ion secondary battery described in Patent Document 1, a carbonaceous material having a high degree of graphitization, such as graphite, is used as the negative electrode active material. However, because lithium ions as well as sodium ions are used, this proposal fails to fundamentally resolve the problem of eliminating the use of the scarce metal of lithium. Furthermore, it can not be said that using lithium ions and sodium ions in combination should be appropriate from the perspective of potential stability during discharge of the obtained sodium ion secondary battery.

The present invention has been devised in view of the above-described conventional art. It is an object of the present invention to provide a sodium ion secondary battery having far superior potential stability during discharge when repeatedly charging and discharging, and a negative electrode active material for a sodium ion secondary battery, the material of which can be efficiently doped and dedoped with sodium ions.

### MEANS FOR SOLVING PROBLEM

To resolve the above-described problems, the present inventors took up carious kinds of carbonaceous materials including differing carbonaceous materials having a different degree of crystallinity, and amorphous carbonaceous materials as an object, and carried out extensive experiments and investigations thereof into the doping and dedoping properties of sodium ions and the stability of a sodium ion secondary battery during discharge without being bound by existing knowledge. Consequently, the inventors gained the following knowledge.

Specifically, sodium ions were doped in a glassy carbonaceous material which had a uniform, dense, and non-crystalline irregular (amorphous) structure and which was believed, because of its dense structure, not to be able to have fine pores capable of storing sodium ions which were much larger in size than lithium ions, it was learned that the glassy carbonaceous material could be doped with a much greater amount than the doping amount of a conventional carbonaceous material, and moreover that the doping and dedoping rates were higher.

A glassy carbonaceous material can be obtained by firing for a long time in a non-oxidizing atmosphere a cured product of a thermosetting resin, for example a resin such as a phenol resin, a furan resin, and a vinyl chloride resin, or a molded product thereof, while avoiding foaming, cracking and the like. Examples of a structure of such a glassy carbonaceous material include a three-dimensional network structure in which long thin ribbon-shaped graphite-like molecules are randomly oriented and twisted around each other (structure referred to as a Jenkins-Kawamura model), a porous structure which is an aggregate of closed shell cells in which hexagonal planes having a size of several nanometers are combined in layers (structure referred to as a Shiraishi model), and the like.

Glassy carbonaceous materials are also called "glassy carbon." As described above, glassy carbonaceous materials have structural characteristics as a non-graphite material. However, in terms of their macro physical and chemical properties, glassy carbonaceous materials also have properties of denseness, gas impermeability, air tightness, corrosion resistance, chemical resistance and the like. Generally, glassy carbonaceous materials are considered as being electrochemically inert. Therefore, it was not even predicted that glassy carbonaceous materials would be capable of being doped and dedoped with sodium ions.

However, when a negative electrode active material for a sodium ion secondary battery was actually made using a glassy carbonaceous material as a sole component or as a main component, it was discovered that the negative electrode active material could be sufficiently doped and dedoped with sodium ions, and that a high energy density could be obtained. Furthermore, it was discovered that by using a glassy carbonaceous material being in the form of granules adjusted to have properties in a predetermined range, the above effects could be further increased. The expression "properties in a predetermined range" refers to the following. Specifically, the average particle diameter of the particles constituting the glassy carbonaceous material is preferably 50 µm or less. Further, this granular glassy carbonaceous material has a BET specific surface area of 100 m²/g or less. In addition, the molar ratio (H/C) of the number of hydrogen atoms (moles) to the number of carbon atoms (moles) contained in the glassy carbonaceous material is 0.2 or less.

The present invention was made based on such knowledge. The present invention provides a sodium ion secondary battery employing the below-described configuration, and a negative electrode active material used therefor.

[1] A sodium ion secondary battery comprising, a positive electrode containing a positive electrode active material capable of being doped and dedoped with sodium ions, a negative electrode containing a negative electrode active material containing, as a sole component or as a main component, a glassy carbonaceous material capable of being doped and dedoped with sodium ions, and an electrolyte containing sodium ions.

[2] The sodium ion secondary battery according to above [1], wherein the glassy carbonaceous material is in the form of granules, the average particle diameter of which is 50 µm or less.

[3] The sodium ion secondary battery according to above [1] or [2], wherein the molar ratio (H/C) of the number of hydrogen atoms (moles) to the number of carbon atoms (moles) contained in the glassy carbonaceous material is 0.2 or less.

[4] A negative electrode active material to be used for a sodium ion secondary battery which comprises a positive electrode containing a positive electrode active material capable of being doped and dedoped with sodium ions, a negative electrode containing a negative electrode active material capable of being doped and dedoped with sodium ions, and an electrolyte containing sodium ions, wherein the negative electrode active material for a sodium ion secondary battery contains a glassy carbonaceous material as a sole component or as a main component.

[5] The negative electrode active material for a sodium ion secondary battery according to above [4], wherein the glassy carbonaceous material is in the form of granules, the average particle diameter of which is 50 µm or less.

[6] The negative electrode active material for a sodium ion secondary battery according to above [4] or [5], wherein the glassy carbonaceous material is in the form of granules, the BET specific surface area of which is 100 m²/g or less.

[7] The negative electrode Active material for a sodium ion secondary battery according to any one of above [4] to [6], wherein the molar ratio (H/C) of the number of hydrogen atoms (moles) to the number of carbon atoms (moles) contained in the glassy carbonaceous material is 0.2 or less.

### EFFECTS OF THE INVENTION

According to the present invention, a glassy carbonaceous material is used as the carbonaceous material for the negative electrode active material, therefore, compared with the conventional art, a sodium ion secondary battery having a larger discharge capacity and better properties as a secondary battery can be produced. Furthermore, a sodium ion secondary battery using a glassy carbonaceous material for the negative electrode active material as a sole component or as a main component not only has a larger discharge capacity, but also has far superior potential stability during discharge and easier handleability as a secondary battery thereby. In addition, the sodium ion secondary battery according to the present invention is capable of rapid charging and discharging, and is better as a secondary battery.

Further, according to the present invention, an inexpensive non-aqueous electrolyte secondary battery can be manufactured by use of sodium ions which are plentiful as a resource, for the electrolyte ions in a non-aqueous electrolyte secondary battery. Therefore, the present invention is very useful industrially.

### BRIEF DESCRIPTION OF DRAWINGS

Fig. 1 is a diagram illustrating a charge/discharge curve of a test battery obtained in Example 1.
Fig. 2 is a diagram illustrating a charge/discharge curve of a test battery obtained in Example 2.
Fig. 3 is a diagram illustrating a charge/discharge curve of a test battery obtained in Example 3.
Fig. 4 is a diagram illustrating a charge/discharge curve of a test battery obtained in Example 4.
Fig. 5 is a diagram illustrating a charge/discharge curve of a test battery obtained in Example 5.
Fig. 6 is a diagram illustrating a charge/discharge curve of a test battery obtained in Example 6.
Fig. 7 is a diagram illustrating a charge/discharge curve of a test battery obtained in Example 7.
Fig. 8 is a diagram illustrating a charge/discharge curve of a test battery obtained in Example 8.
Fig. 9 is a diagram illustrating a charge/discharge curve of a test battery obtained in Example 9.

### BEST MODE(s) FOR CARRYING OUT THE INVENTION

As described above, a sodium ion secondary battery according to the present invention is characterized by comprising a positive electrode containing a positive electrode active material capable of being doped and dedoped with sodium ions, a Negative electrode containing a Negative electrode active material containing, as a sole component or as a main component, a glassy carbonaceous material capable of being doped and dedoped with sodium ions, and an electrolyte containing sodium ions.

The present invention is described in morse detail while focusing on the glassy carbonaceous material below. Subsequently, the other essential elements of the secondary battery, namely, the positive electrode and the electrolyte are described. Furthermore, other optional constituent elements are described.

### (Glassy Carbonaceous Material)

The "glassy carbonaceous material" used as a negative electrode active material for a sodium ion secondary battery according to the present invention refers to a material that can be obtained by firing for a long time in a non-oxidizing atmosphere a cured product of a thermosetting resin, for example, a resin such as a phenol resin, a furan resin, and a vinyl chloride resin, or a molded product thereof, while avoiding foaming, cracking and the like. Regarding such a glassy carbonaceous material, specific examples of a structure thereof include a three-dimensional network structure in which long thin ribbon-shaped graphite-like molecules are randomly oriented and twisted around each other (structure referred to as a Jenkins-Kawamura model), and a porous structure which is an aggregate of closed shell cells in which hexagonal planes having a size of several nanometers are combined in layers (structure referred to as a Shiraishi model). The knowledge concerning those is disclosed in, for example, "Compendium of Carbon Technology for Electronics", Technical Information Institute, (2004) p. 124 to p. 136; and "introduction to New Carbon MatErials", Ed. by the Carbon Society of Japan, (1996) p. 113 to p. 116.

The glassy carbonaceous material according to the present invention preferably has physical properties of a porosity of 6% or less, a density of 1.4 g/cm³ or more and 1.6 g/cm³ or less, and a coefficient of thermal expansion of 2.0×10⁻⁶/°C or more and 4.0×10⁻⁶/°C or less.

Furthermore, the glassy carbonaceous material, according to the present invention is preferably in the form of granules, and a shape of which is preferably approximately spherical. The average particle diameter of these granules (the particles constituting the glassy carbonaceous material) is, usually, 50 µm or less. To further increase a discharge capacity of the sodium ion secondary battery, the average particle diameter is preferably 20 µm or less, and more preferably 10 µm or less. Further, it is preferred that the diameter of all of the particles constituting the glassy carbonaceous material is 30 µm or less, and more preferably 20 µm or less.

The above-described granular glassy carbonaceous material has a BET specific surface area of, usually, 100 m²/g or less. To further increase the discharge capacity of the sodium ion secondary battery, 10 m²/g or less is preferred, and 5 m²/g or less is more preferred.

The molar ratio (H/C) of the number of hydrogen atoms (moles) to the number of carbon atoms (moles) contained in the glassy carbonaceous material is preferably 0.2 or less, and more preferably 0.1 or less.

Examples of granular glassy carbonaceous materials which can satisfy the above-described ranges include GC20SS (trade name) and GC10 (trade name) manufactured by Tokai Carbon Co., Ltd.

In the present specification, the term of "average particle diameter" means the volume average particle diameter measured with a laser refraction-type particle size distribution measuring apparatus such as "SALD 2000J" (registered trademark, manufactured by Shimadzu Corporation) on a dispersion obtained by dispersing the carbonaceous material in an aqueous solution containing a neutral detergent. More specifically, the term of "volume average particle diameter" means the particle diameter at which the cumulative value on a graph of the particle size distribution of the glassy carbonaceous material measured with a laser refraction-type particle size distribution measuring apparatus is 50%.
Further, that the diameter of all of the particles constituting the glassy carbonaceous material is not greater than a specified value (for example, 30 µm) is confirmed by measuring with the laser refraction-type particle size distribution measuring apparatus. Specifically, that the diameter of all of the particles constituting the glassy carbonaceous material is, e.g., 30 µm or less means that in the particle size distribution graph of the glassy carbonaceous material measured with the laser refraction-type particle size distribution measuring apparatus, the cumulative value at a particle diameter of 30 µm is 100%.

The diameter of the particles constituting the glassy carbonaceous material in the negative electrode of the sodium ion secondary battery according to the present invention can also be measured by electron microscopy (for example, SEM) of the negative electrode. In this case, the average particle diameter is calculated by arbitrarily selecting 50 particles, measuring the diameter of those particles, and determining the average value thereof.

with respect to methods for pulverizing a block-like or a fibrous glassy carbonaceous material into granules, pulverizers capable of finely pulverizing such as an impact friction pulverizer, a centrifugal grinder, a ball mill (for example, a tube mill, a compound mill, a conical ball mill, and a rod mill), a vibration mill, a colloid mill, a friction disk mill, and a jet mill are preferably used. Among these pulverizing methods, a method using a ball mill is usual. When using a ball mill, to avoid contamination of metal powders, it is preferable the balls and pulverizing vessels be made of a non-metal such as alumina and agate.

The glassy carbonaceous material used in the present invention has a high degree of hardness, and the cost of finely pulverizing the material is greater. Therefore, the granular glassy carbonaceous material may be obtained by mixing a thermosetting resin and a volatile foaming agent, foaming and curing the resultant mixture with a curing agent, then firing the foamed product in a non-oxidizing atmosphere and pulverizing. Alternatively, the granular glassy carbonaceous material may be obtained by firing after the foamed product is pulverized (for example, refer to JP3-164416A).

The granular glassy carbonaceous material may also be obtained by subjecting a thermosetting resin fiber having a thickness of 1 to 20 decitex (g/10000 m) to a firing-carbonizing treatment by heating in a non-oxidizing atmosphere, then subjecting the resultant product to an activation treatment by heating to a temperature of 600 to 1,500°C in an activating gas atmosphere, and pulverizing the obtained glassy carbonaceous fibers. Alternatively, the granular glassy carbonaceous material may be obtained by subjecting a thermosetting resin fiber having a thickness of 1 to 20 decitex to a firing-carbonizing treatment and to an activation treatment simultaneously by heating to a temperature of 600 to 1,500°C in an activating gas atmosphere, and pulverizing the obtained glassy carbonaceous fibers (for example, see JP2006-131452A).

At the thermoplastic resin stage, the resin may be pulverized or adjusted so as to have an average particle diameter of 50 µm or less, preferably 30 µm or less, and more preferably 10 µm or less, and then treated at a high temperature. At this point, the fired glassy carbonaceous material may again be pulverized so as to have an average particle diameter of 50 µm or less, preferably 30 µm or less, and more preferably 10 µm or less.

Further, a granular glassy carbonaceous material in which the particles constituting the material are approximately spherical may be obtained by, e.g., mixing an initial stage condensate of a thermosetting resin formed from a furan resin, a phenol resin, or a mixed resin thereof with a curing agent; adding the mixture dropwise into a sulfuric acid bath while rolling the mixture in the bath to form a microsphere powder being cured; and subsequently firing thereof (for example, refer to JP63-59963B) .

Moreover, a granular glassy carbonaceous material in which the particles constituting the material are approximately spherical may be obtained by adjusting an initial stage condensate of a thermosetting resin having a residual carbon ratio of 45% or more to a microsphere powder having an average particle diameter of 0.2 to 120 µm and a sphericity of 1.2 or less, subjecting the microsphere powder to a first curing treatment by dipping in an acidic solution of 10 to 50°C for 30 minutes or more, to a second curing treatment by holding for 30 minutes or more in air at 150 to 300°C, and to a firing-carbonizing treatment in a non-oxidizing atmosphere (for example, refer to JP5-1-63007A).

In the above, the microsphere powder of the initial stage condensate of a thermosetting resin being adjusted in shape is subjected to the first curing treatment by dipping in an acidic solution. It is preferred to use an inorganic acid such as hydrochloric acid or sulfuric acid as the acidic solution. The dipping treatment is carried out for at least 30 minutes at a solution temperature of 10 to 50°C. The resin powder which has undergone the first curing treatment is then subjected to the second curing treatment by holding for 30 minutes or more in air at a temperature in the range of 150 to 300°C, whereby the curing of the resin is completed. The completely cured resin powder is then subjected to the firing-carbonizing treatment using a heating furnace held in a non-oxidizing atmosphere. The firing operation is carried out by heating in an electric furnace in a state in which the resin powder is filled in a graphite crucible, or by continuously firing using an apparatus such as a rotary kiln.
The firing temperature is usually in the range of 800 to 1,500°C. The firing-carbonizing treatment may optionally be carried out at a temperature of 2,000°C or more in a non-oxidizing atmosphere.

The method for manufacturing the granular glassy carbonaceous material in which the particles constituting the material are approximately spherical is described below in more detail. An initial stage condensate of a phenol resin is subjected to suspension polymerization while stirring for 3 hours in 1 N hydrochloric acid aqueous solution (20°C) to which 1% polyvinyl alcohol was added, to adjust to a microsphere powder having an average particle diameter of 50 µm and a sphericity of 1.1. The obtained resin powder is subjected to the first curing treatment by dipping in 12 N hydrochloric acid aqueous solution, and to the second curing treatment by heating in air. Next, the cured resin powder is filled into a graphite crucible, and set in an electric furnace held in a nitrogen gas atmosphere. Then, the firing-carbonizing treatment is carried out at a temperature of 1,000°C.

### (other Materials for Negative Electrode)

As constituent materials of the negative electrode of the sodium ion secondary battery according to the present invention having a glassy carbonaceous material as a negative electrode active material, in addition to the above-described glassy carbonaceous material, a negative electrode collector, a binder being added to facilitate molding as the negative electrode, a conducting agent being added to improve conductive properties and the like, may be used.

As the above negative electrode collector, copper, nickel, stainless steel and the like may be used. Particularly, copper is preferred from the perspectives that copper does not easily form an alloy with lithium or sodium and is easily processed into a thin film. Examples of a method for allowing a mixture including the negative electrode active material to be supported on the negative electrode collector include a pressure molding method, and a fixing method in which the mixture is formed into a paste using a solvent or the like, applied onto the negative electrode collector, dried, then pressed, and the like.

Examples of the conductive agent include conductive carbons such as graphite, carbon black, acetylene black, Ketches black, and activated carbon different from that in the present invention; graphite-based conductive agents such as natural graphite, thermally expanded graphite, flake graphite, and expanded graphite; carbonaceous fibers such as vapor-phase-grown carbonaceous fiber; metal fine particles or metal fibers of aluminum, nickel, copper, silver, gold, platinum and the like; conductive metal oxides such as ruthenium oxide or titanium oxide; and conductive polymers such as polyaniline, polypyrrole, polythiophene, polyacetylene, and polyacene. Among these conductive agents, carbon black, acetylene black, and Ketchen black are especially preferred from the perspective of effectively improving conduction in a small amount.

The blended amount of the above-described conductive agent in the negative electrode is, usually 30 parts by weight or less, and preferably 10 parts by weight or less, based on 100 parts by weight of the glassy carbonaceous material used for the present invention.

Concerning the necessity of the conductive agent in the negative electrode, since the negative electrode active material itself is conductive in the present invention, the conductive agent is not absolutely necessary. It may be said that the purpose of using the conductive agent is to increase the packing ratio of the negative electrode active material in the negative electrode rather than to improve the conductivity in the negative electrode. Therefore, when a conductive agent is used, it is preferred to control the particle diameter of the conductive agent.

The binder is preferably a thermoplastic resin. Examples of thermoplastic resins include polyolefins such as polyethylene and polypropylene. Further examples of thermoplastic resins include the polymer of a fluorine compounds such as fluorinated olefin, tetrafluoroethylene, trifluoroethylene, polyvinylidene fluoride (PVDF), and hexafluoropropylene.

Further examples of the binder include polysaccharides such as starch, methyl cellulose, carboxymethyl cellulose, hydroxymethyl cellulose, hydroxyethyl cellulose, hydroxypropyl cellulose, carboxymethyl hydroxyethyl cellulose, nitrocellulose, and derivatives of those.

In the present invention, a plurality of kinds of binder may be used as the binder. The blended amount of the binder in the negative electrode is usually about 0.5 to 30 parts by weight, and preferably about 2 to 30 parts by weight, based on 100 parts by weight of the glassy carbonaceous material.

### (Other Constituent Elements of Sodium Ion Secondary Battery)

As described above, in the sodium ion secondary battery according to the present invention, a glassy carbonaceous material for the negative electrode active material constituting the negative electrode is used. As constituent elements of the battery other than this negative electrode, a positive electrode and an electrolyte are important elements in the secondary battery. When the sodium ion secondary battery according to the present invention is manufactured, for example, known technology used in lithium ion secondary batteries is applicable. Specifically, the battery can be produced by housing an electrode assembly obtained by laminating a positive electrode, a separator, and a negative electrode, and winding thereof in a battery can, and then being impregnated with a non-aqueous electrolyte obtained by dissolving a solute in a solvent. These are described below.

### (Materials Used in Positive Electrode)

A positive electrode of the sodium ion secondary battery according to the present invention usually includes materials, such as a binder, a positive electrode collector, and a conductive agent, in addition to a positive electrode active material, to facilitate formation as a positive electrode.

### (Positive Electrode Active Material)

The positive electrode active material is a material capable of being doped and dedoped with sodium ions. Examples of such a positive electrode active material include compounds represented by NaFeO₂, NaNiO₂, NaCoO₂, NaMnO₂, NaFe₁₋ₓM¹ₓO₂, NaNi₁₋ₓM¹xO₂, NaCo₁₋ₓM¹ₓO₂, and NaMn₁₋ₓM¹ₓO₂ (wherein M¹ is one kind of element or more selected from the group consisting of trivalent metals, and 0 ≤ x < 0.5). Among these, by using a mixed oxide which contains mainly iron and sodium and has a hexagonal crystal structure as a positive electrode active material, a secondary battery which is capable of a high discharge voltage and has a high energy density can be obtained.

More preferred as the positive electrode active material is a mixed oxide containing mainly iron and sodium, wherein the mixed oxide has a hexagonal crystal structure and has a value obtained by dividing a spacing 2.20 Å peak intensity by a spacing 5.36 Å peak intensity of 2 or less in X-ray diffraction analysis of the mixed oxide. When heating a metal compound mixture containing an iron compound and a sodium compound at a temperature range of 400°C or more and 900°C or less, it is preferable that an atmosphere of the heating at a temperature range of less than 100°C during a temperature increasing be an inert atmosphere.

A thermoplastic resin is usually used as the binder in the Positive electrode. Specific examples thereof include polyvinylidene fluoride (PVDF), polytetrafluoroethylene (PTFE), a tetrafluoroethylene/ hexafluoropropylene/ vinylidene fluoride copolymer, a hexafluoropropylene/ vinylidene fluoride copolymer, and a tetrafluoroethylene/ perfluorovinyl ether copolymer. These may be used alone, or two or more kinds thereof may be mixed and used.

As the above positive electrode collector, aluminum, nickel, stainless steel and the like may be used. Aluminum is preferred from the perspectives that aluminum is easily processed into a thin film and is inexpensive. Examples of a method for allowing a mixture including the positive electrode active material, the binder, the conductive agent and the like to be supported on the positive electrode collector include a pressure molding method, and a fixing method in which the mixture is formed into a paste using a solvent or the like, applied onto the positive electrode collector, dried and then pressed. Optionally, a plurality of active materials may be mixed in the positive electrode.

In the sodium ion secondary battery, when an electrode containing a metal of sodium (for example, in the form of a metal foil) is used as a counter electrode to the electrode containing the carbonaceous material, the electrode containing the metal of sodium may be deemed to serve as the negative electrode and the electrode containing the carbonaceous material may be deemed to serve as the positive electrode in some cases. However, in the present invention, even in such cases, the electrode containing the metal of sodium is regarded as a positive electrode and the electrode containing the carbonaceous material is regarded as a negative electrode.

### (Separator)

As a separator used in the sodium ion secondary battery of the present invention, a member that has a form such as a porous film, a nonwoven fabric, and a woven fabric, and is made of a material of a polyolefin resin such as polyethylene and polypropylene, a fluororesin, nylon, and an aromatic aramid can be used. The thickness of the separator is usually about 10 to 200 µm, and preferably 10 to 30 µm. The separator may be a member in which separators having differing porosities are laminated.

### (Non-aqueous Electrolyte)

Examples of a solvent usable in the non-aqueous electrolyte of the sodium ion secondary battery of the present invention include carbonates such as propylene carbonate (PC), ethylene carbonate (EC), vinylene carbonate, dimethyl carbonate (DMC), diethyl carbonate, ethyl methyl carbonate, isopropyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoro propyl methyl ether, 2,2,3,3-tetrafluoropropyl difluoromethyl ether, tetrahydrofuran, and 2-methyltetrahydrofuran; esters such as methyl formate, methyl acetate, and y-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, 1,3-propane sultone, ethylene sulfite, propylene sulfite, dimethyl sulfite, and diethyl sulfite; and those obtained by introducing a fluorine substituent into the above-described organic solvents. Usually, two or more kinds of these solvents are mixed and used. Among these, preferred is a mixed solvent containing carbonates, and more preferred is a mixed solvent of a cyclic carbonate and a non-cyclic carbonate or a mixed solvent of a cyclic carbonate and ethers.

Examples of the solute used in the non-aqueous electrolyte of the sodium ion secondary battery of the present invention include NaClO₄, NaPF₆, NaBF₄, NaCF₃SO₃, NaN(CF₃SO₂)₂, NaN(FSO₂)_{2,} NaN(C₂F₅SO₂)₂, and NaC(CF₃SO₂)₃. The mixing ratio of the solvent and the solute is not especially limited, and is suitably set according to purposes.

A solid electrolyte may also be used for the non-aqueous electrolyte of the sodium ion secondary battery of the present invention. Examples of the solid electrolyte which may be used include an electrolyte formed by dissolving the above-described solute in a polyethylene oxide-based polymer, or a polymer including at least one of a polyorganosiloxane chain and a polyoxyalkylene chain. A so-called gel-type electrolyte, in which a non-aqueous electrolyte solution is held in a polymer, may also be used. When an electrolyte consisting of an inorganic compound is used, safety can be enhanced in some cases. When using a solid electrolyte in the present invention, a separator such as that described above may not be necessary in some cases.

### (Battery Shape and Exterior Packaging)

The shape of the sodium ion secondary battery according to the present invention containing the above-described glassy carbonaceous material is not especially limited. Examples of the shape include any of a paper shape, a coin shape, a cylindrical shape, and a square shape.

In replacement of using a hard case made of metal being commonly functioned as a terminal of the negative electrode or the positive electrode, a bag-like package consisting of, e.g., a laminated sheet including aluminum may be used for the exterior packaging.

The sodium ion secondary battery according to the present invention, thus produced using the above-described glassy carbonaceous material, has far superior potential stability during discharge when a charge and a discharge are repeated.

### Examples

The present invention is described in more detail with the following examples. The following examples are preferred examples for describing the present invention, and do not limited the present invention in any way.

### (Examples 1 and 2)

(Charge and Discharge Performance Evaluation of Sodium Ion Secondary Battery According to the Present Invention)

### (1) Production of Negative Electrode

A glassy carbonaceous material (manufactured by Tokai Carbon Co., Ltd., trade name "GC20SS"', which was granular and had an average particle diameter of the particles constituting the material of 12 µm, in which the particles all had a diameter of 30 µm or less, and the BET specific surface area of the material was 0.5 m²/g) and polyvinylidene fluoride (PVDF) to be used as a binder were weighed so as to form a composition of glassy carbonaceous material : binder = 95 : 5 (weight ratio). The binder was dissolved in N-methylpyrrolidone (NMP), and the glassy carbonaceous material was added thereto to form a slurry. The obtained slurry was applied with a doctor blade onto a 10 µm thick copper foil which serves as a negative electrode collector, and this was then dried with a dryer, and an electrode sheet was obtained. This electrode sheet was punched with an electrode punch, and a round working electrode EA1 having a diameter of 1.5 cm was obtained.

### (2) Production of Test Battery for Charge and Discharge Testing for Negative Electrode Active Material Evaluation

The above-described working electrode EA1 was placed on the lower lid of a coin cell with the copper foil face of the working electrode facing downwards and combined with a 1 M NaClO₄/PC or a 1 M NaClO₄/EC+DMC as an electrolyte, a polypropylene porous film (thickness 20 µm) as a separator, and sodium metal (manufactured by Aldrich) as a counter electrode to produce a test battery TB1 (Example 1, 1 M NaClO₄/PC electrolyte) and a test battery TB2 (Example 2, 1 M NaClO₄/EC+DMC electrolyte). Assembly of the test batteries was performed in a glove box under an argon atmosphere.

### (3) Charge and Discharge Testing

A constant-current charge and discharge test was carried out on the test batteries TB1 (Example 1) and TB2 (Example 2) under the following conditions.
Charge and Discharge Conditions:
Charging (insertion of sodium into the glassy carbonaceous material) was carried out at a CC (constant current) charge of 0.2 mA/cm² up to 0.01 V. Next, the charging was switched to a CV (constant voltage) charge at 0.01 V. When the current value dropped to 0.02 mA/cm², the charging was stopped.
Discharging (release of sodium from the glassy carbonaceous material) was carried out at a CC (constant current) discharge of 0.2 mA/cm². The discharging was cut off at a voltage of 1.0 V.

### (4) Results of Charge and Discharge Testing

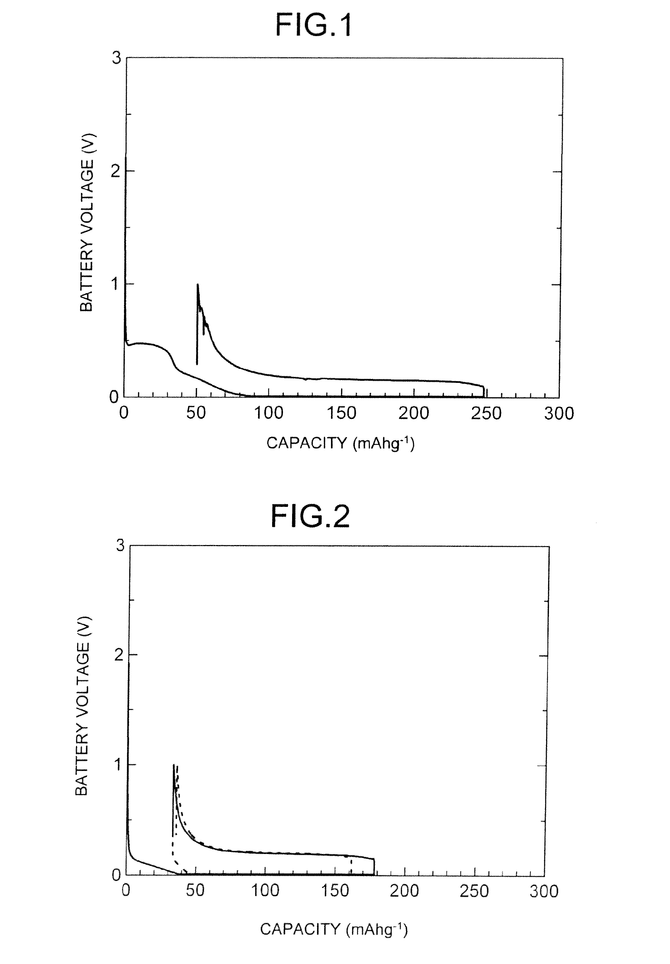

As illustrated in Fig. 1, the charge and discharge testing results for TB1 (Example 1) were a first cycle charging capacity of 248 mAh/g, and a discharge capacity of 201 mAh/g.

As illustrated in Fig. 2, the charge and discharge testing results for TB2 (Example 2) were a first cycle charging capacity of 182 mAh/g, and a discharge capacity of 153 mAh/g.

Thus, by using the glassy carbonaceous material of the present invention for the negative electrode active material, a negative electrode which had a low potential and little voltage variation during discharge was obtained.

### (Comparative Example 1)

A test battery was manufactured in the same manner as in Examples 1 and 2, except that commercially-available graphite was used as the carbonaceous material for the negative electrode active material. Results of the charge and discharge testing performed on the obtained test batteries showed that the first cycle discharge capacity was 10 mAh/g or less.

### (Example 3)

### (Charge and Discharge Performance Evaluation of Sodium Ion Secondary Battery)

### (1) Synthesis of Positive Electrode Active Material

In a glove box with an argon atmosphere, Na₂O₂ (manufactured by Flucka Chemie AG) and Fe₃O₄ (manufactured by Aldrich Chemical Company Inc.) were weighed so that the Na and the Fe were in a stoichiometric ratio of NaFeO₂, and then thoroughly mixed in an agate mortar. The obtained mixture was placed in an alumina crucible, which was then placed in an electric furnace and kept at 650°C for 12 hours. The crucible was removed from the furnace, and a positive electrode active material MC1 for a sodium ion secondary battery was obtained.

### (2) Production of Positive Electrode

The positive electrode active material MC1 obtained in the above described (1) and a conductive material were weighed so as to form a 70:25 composition, and then mixed in an agate mortar to obtain a mixture X. Then, polyvinylidene fluoride (PVDF) as a binder was weighed so as to form a composition of MC1 : conductive material : binder = 70 : 25 : 5 (weight ratio). This binder was dissolved in N-methylpyrrolidone (NMP), and the mixture X was added thereto to form a slurry. This slurry was applied with a doctor blade onto a 10 µm thick aluminum foil which serves as a positive electrode collector, and this was then dried with a dryer, and an electrode (positive electrode) sheet was obtained. This electrode sheet was punched with an electrode punch, and a round positive electrode EC1 having a diameter of 1.5 cm was obtained.

### (3) Production of Negative Electrode

A negative electrode EA2 using a glassy carbonaceous material for a negative electrode active material was formed in the same manner as in Example 1.

### (4) Production of Test Battery

The above-described positive electrode EC1 was placed on the lower lid of a coin cell with the aluminum foil surface of the positive electrode facing downwards and combined with a 1 M NaClO₄/PC as an electrolyte, a polypropylene porous film (thickness 20 µm) as a separator, and the negative electrode EA2 placed with its copper foil surface facing upwards to produce a test battery TB3. Assembly of the test battery TB3 was performed in a glove box under an argon atmosphere.

### (5) Charge and Discharge Testing

Charge and Discharge Conditions:
Charging was carried out at a CC (constant current) charge of 0.353 mA up to 4.0 V. Next, the charging was switched to a CV (constant voltage) charge at 4.0 V. When the current value dropped to 0.035 mA, the charging was stopped.
Discharging was carried out at a CC (constant current) discharge of 0.353 mA/cm² The discharging was cut off at a voltage of 1.5 V.

### (6) Results of Charge and Discharge Testing

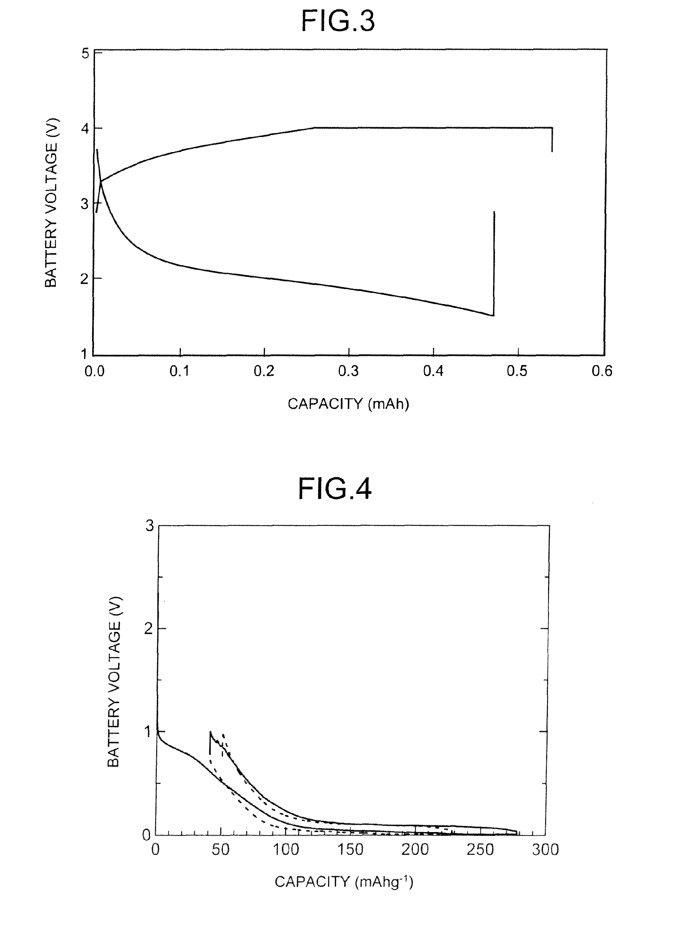

As illustrated in Fig. 3, the charge and discharge testing results for TB3 (Example 3) were a first cycle discharge capacity of 0.47 mAh.

### (Comparative Example 2)

A test battery was manufactured in the same manner as in Example 3, except that commercially-available graphite was used as the carbonaceous material for the negative electrode active material. Results of the charge and discharge testing performed on the obtained test battery showed that the first cycle discharge capacity was 0.01 mAh or less.

It can be clearly seen from Examples 1 to 3 and Comparative Examples 1 and 2 that by using the glassy carbonaceous material for the negative electrode active material according to the present invention, a secondary battery which had a high average discharge voltage and little voltage variation during discharge could be obtained.
When using a non-aqueous electrolyte in which propylene carbonate (PC) that has an asymmetrical molecular structure and is a liquid over a very wide range from the solidification point of -48.8°C to the boiling point of 242°C is used as the solvent, a sodium ion secondary battery which has a wide operational temperature range can be obtained.
Moreover, the sodium ion secondary battery of the present invention can be charged and discharged at a rapid rate of about 0.75 C with a charging and discharging current of 0.353 mA for a battery discharge capacity of 0.47 mAh.

### (Examples 4 and 5)

A test battery TB4 (Example 4, 1 M NaClO₄/PC electrolyte) and a test battery TB5 (Example 5, 1 M NaClO₄/EC+DMC electrolyte) were manufactured in the same manner as in Examples 1 and 2, respectively, except that a negative electrode EA4 was formed as a working electrode using GC10 (trade name), a glassy carbonaceous material, manufactured by Tokai Carbon Co., Ltd., which was granular and had an average particle diameter of the particles constituting the material of 6 µm, in which the particles all had a diameter of 20 µm or less, and the BET specific surface area of the material was 1 m²/g for the negative electrode active material. The charge and discharge testing was performed on the obtained test batteries.

As illustrated in Fig. 4, the charge and discharge testing results for TB4 (Example 4) were a first cycle charging capacity of 279 mAh/g, and a discharge capacity of 241 mAh/g.

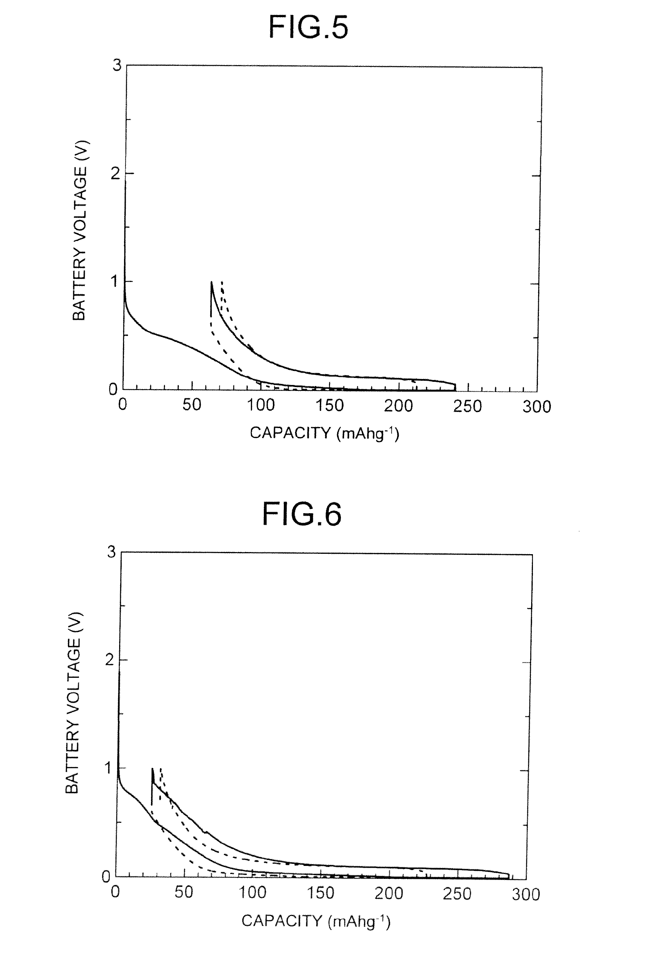

As illustrated in Fig. 5, the charge and discharge testing results for TB5 (Example 5) were a first cycle charging capacity of 245 mAh/g, and a discharge capacity of 181 mAh/g.

### (Examples 6 to 9)

### (1) Synthesis of Granular Glassy Carbonaceous Material

An initial stage condensate of a phenol resin was subjected to suspension polymerization while stirring for 3 hours in 1 N hydrochloric acid aqueous solution (20°C) to which 1% polyvinyl alcohol had been added, thus preparing a microsphere powder having an average particle diameter of 50 µm and a sphericity of 1.1. The obtained resin powder was dipped in a 12 N hydrochloric acid aqueous solution. Then, the resin powder was subjected to a curing treatment by heating in air. Next, the cured resin powder was filled into a graphite crucible, and set in an electric furnace held in a nitrogen gas atmosphere. Then, a firing-carbonizing treatment was carried out at temperatures of 1,300°C and 1,700°C. Each of the obtained carbonized materials was pulverized using a ball mill and classified, and granular glassy carbonaceous materials CP3 and CP4 in which all of the particles constituting these materials had a diameter of 30 µm or less were obtained.

(2) Production of Test Battery and Charge and Discharge Testing Thereof

A test battery TB6 (Example 6, 1 M NaClO₄/PC electrolyte) and a test battery TB7 (Example 7, 1 M NaClO₄/EC+DMC electrolyte) were manufactured in the same manner as in Examples 1 and 2, respectively, except that a working electrode EA3 was manufactured using CP3 as a carbonaceous powder. A charge and discharge test was then performed on the obtained test batteries.

A test battery TB8 (Example 8, 1 M NaClO₄/PC electrolyte) and a test battery TB9 (Example 9, 1 M NaClO₄/EC+DMC electrolyte) were manufactured in the same manner as in Examples 1 and 2, respectively, except that a working electrode EA4 was manufactured using CP4 as the carbonaceous material. A charge and discharge test was then performed on the obtained test batteries.

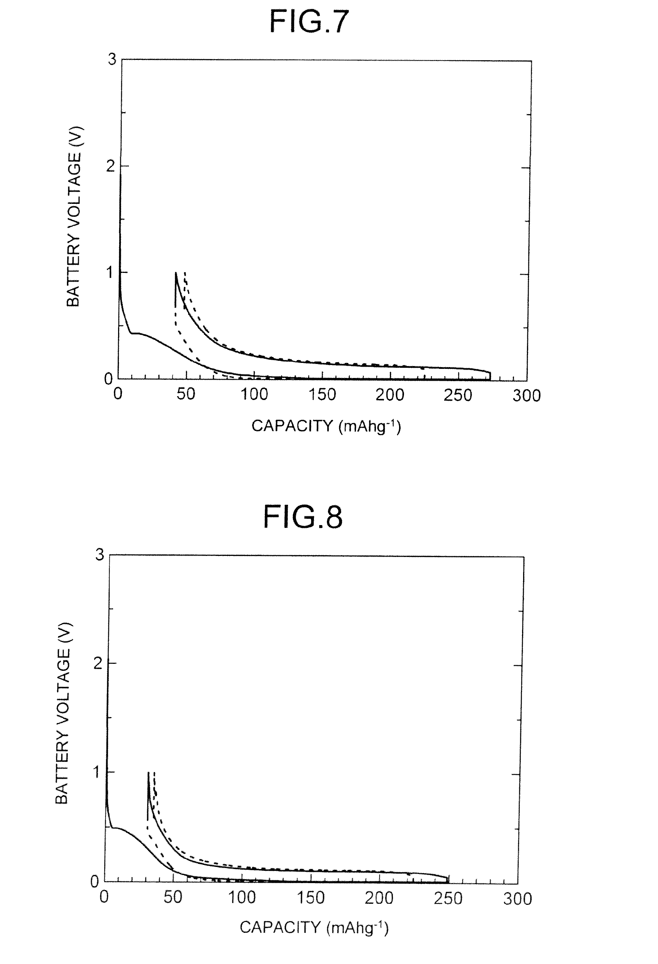

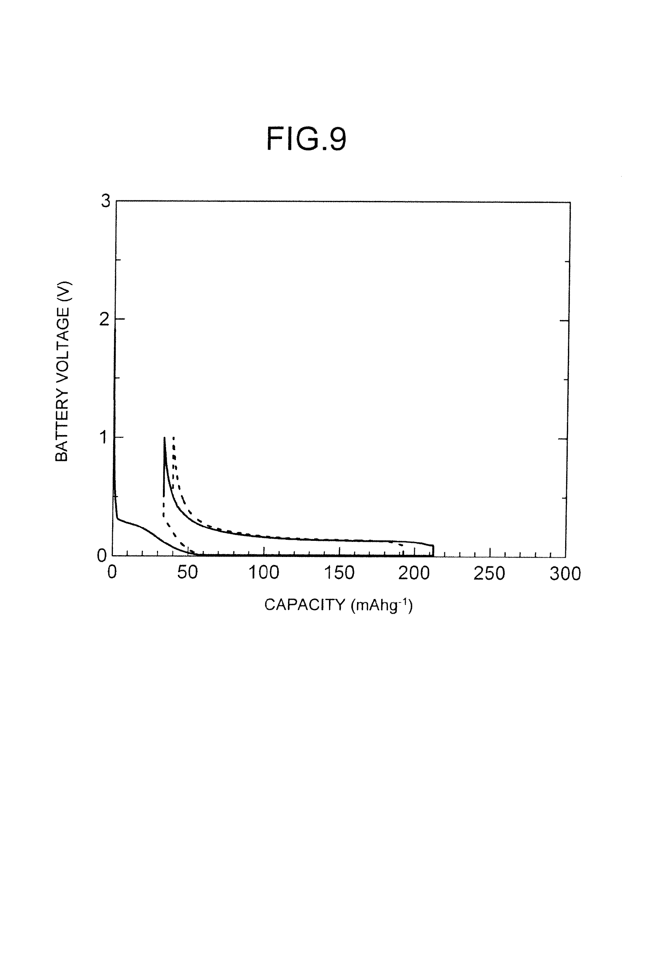

As illustrated in Fig. 6, the charge and discharge testing results for TB6 (Example 6) were a first cycle charging capacity of 290 mAh/g, and a discharge capacity of 265 mAh/g.
As illustrated in Fig. 7, the charge and discharge testing results for TB7 (Example 7) were a first cycle charging capacity of 275 mAh/g, and a discharge capacity of 230 mAh/g.
As illustrated in Fig. 8, the charge and discharge testing results for TB8 (Example 8) were a first cycle charging capacity of 250 mAh/g, and a discharge capacity of 222 mAh/g.
As illustrated in Fig. 9, the charge and discharge testing results for TB9 (Example 9) were a first cycle charging capacity of 216 mAh/g, and a discharge capacity of 182 mAh/g.

### INDUSTRIAL APPLICABILITY

As explained above, the sodium ion secondary battery according to the present invention uses a glassy carbonaceous material for its negative electrode active material. Therefore, this sodium ion secondary battery not only has an increased discharge capacity compared with the conventional art, but also has far superior potential stability during discharge, and further has excellent durability and handleability as a secondary battery. In addition, the sodium ion secondary battery according to the present invention is capable of rapid charging and discharging, and has even better properties as a secondary battery. Moreover, the sodium ion secondary battery according to the present invention can be manufactured at a lower cost by using sodium ions, which are plentiful as a resource, for the electrolyte ions of a non-aqueous electrolyte secondary battery. Therefore, the present invention is very useful industrially.

## Claims

1. A sodium ion secondary battery comprising;
a positive electrode containing a positive electrode active material capable of being doped and dedoped with sodium ions,
a negative electrode containing a negative electrode active material containing, as a sole component or as a main component, a glassy carbonaceous material capable of being doped and dedoped with sodium ions, and
an electrolyte containing sodium ions.

2. The sodium ion secondary battery according to claim 1,
wherein the glassy carbonaceous material is in the form of granules, the average particle diameter of which is 50 µm or less.

3. The sodium ion secondary battery according to claim 1,
wherein the molar ratio (H/C) of the number of hydrogen atoms (moles) to the number of carbon atoms (moles) contained in the glassy carbonaceous material is 0.2 or less.

4. A negative electrode active material to be used for a sodium ion secondary battery which comprises a positive electrode containing a positive electrode active material capable of being doped and dedoped with sodium ions, a negative electrode containing a negative electrode active material capable of being doped and dedoped with sodium ions, and an electrolyte containing sodium ions,
wherein the negative electrode active material for a sodium ion secondary battery contains a glassy carbonaceous material as a sole component or as a main component.

5. The negative electrode active material for a sodium ion secondary battery according to claim 4,
wherein the glassy carbonaceous material is in the form of granules, the average particle diameter of which is 50 µm or less.

6. The negative electrode active material for a sodium ion secondary battery according to claim 4,
wherein the glassy carbonaceous material is in the form of granules, the BET specific surface area of which is 100 m²/g or less.

7. The negative electrode active material for a sodium ion secondary battery according to claim 4,
wherein the molar ratio (H/C) of the number of hydrogen atoms (moles) to the number of carbon atoms (moles) contained in the glassy carbonaceous material is 0.2 or less.
